# EUROPÄISCHE PATENTANMELDUNG

(11) **EP 1 169 911 A2**
(43) Veröffentlichungstag der Anmeldung: **09.01.2002**
(21) Anmeldenummer: 01116020.7
(22) Anmeldetag: 02.07.2001
(51) Int. Cl.: A01G 17/10

(54) **Aststütze**

(30) Priorität: 03.07.2000 DE 20011186 U; 07.03.2001 DE 10110718
(71) Anmelder: Wolf, Anton, 63456 Hanau (DE); Wolf, Karl, Dipl.-Ing., 63150 Heusenstamm (DE); Wolf, Hermann, Dipl.-Ing., 63150 Heusenstamm (DE)
(72) Erfinder: Wolf, Anton, 63456 Hanau (DE); Wolf, Karl, Dipl.-Ing., 63150 Heusenstamm (DE); Wolf, Hermann, Dipl.-Ing., 63150 Heusenstamm (DE)
(74) Vertreter: KEIL & SCHAAFHAUSEN

(57) **Zusammenfassung**

Die Erfindung betrifft eine Aststütze, insbesondere für Bäume, mit einem gabelartigen Auflager (2) für einen Ast, welches z.B. eine im Wesentlichen U- oder V-förmige Auflagefläche (3) aufweist, und mit einer Halterung (4) zur Anbringung des Auflagers (2) an einem Stützstab (5) in vorgegebener Höhe, wobei die Halterung (4) einen mit Mitteln zum werkzeugfreien Festlegen an dem Stützstab (5) ausgestalteten Seitenausleger (6) aufweist und das Auflager (2) sich an dem freien Ende des Seitenauslegers (6) befindet.

## Beschreibung

Die Erfindung betrifft eine Aststütze, insbesondere für Bäume, mit einem gabelartigen Auflager für einen Ast, welches z.B. eine im Wesentlichen U- oder V-förmige Auflagefläche aufweist, und mit einer Halterung zur Anbringung des Auflagers an einem Stützstab in vorgegebener Höhe.

Derartige Aststützen werden verwendet, um schwere oder gebrechliche Äste an Bäumen oder Sträuchern abzustützen und dadurch deren Abknicken oder Abbrechen zu verhindern. Sie werden häufig dann eingesetzt, wenn Äste mit Früchten von erheblichem Gewicht zusätzlich belastet sind.

Aus der DE 76 23 891 U ist eine Vorrichtung zur Unterstützung der Äste von Bäumen mit einem aus mindestens zwei teleskopartig ineinander verschiebbaren und mit einer Einrichtung zur gegenseitigen Arretierung versehenen Teilstücken bestehenden Schaft bekannt, dessen oberstes Teilstück vorzugsweise zwei Seitenarme aufweist. Zur Abstützung der Äste sind sowohl an dem Kopfende des obersten Teilstückes als auch an den dem Schaft gegenüberliegenden Enden der Seitenarme im Wesentlichen U-förmig ausgebildete Astaufnahmegabeln angebracht. Eine solche Vorrichtung ist sehr aufwendig herzustellen und dementsprechend teuer. Außerdem können die verschiedenen Astgabeln einer Vorrichtung nur dann gleichzeitig eingesetzt werden, wenn mehrere Äste eines Baumes, die zudem nicht allzu weit voneinander entfernt sein dürfen, abzustützen sind. Des weiteren setzt die Anwendung der auf dem Kopfende des obersten Teilstücks angeordneten Astgabel voraus, dass das Gelände ein Aufstellen der Vorrichtung genau an der Stelle des abzustützenden Astes zulässt. In der DE 92 00 181 U1 wird eine Aststütze für Bäume mit einer U-förmigen Astaufnahmegabel offenbart, die mit einer Fassung am oberen Ende eines Stützstabes aufgesetzt ist. Eine vergleichbare Aststütze ist auch aus der DE 88 12 562 U1 bekannt. Beide Aststützen haben den Nachteil, dass sie direkt unterhalb des Astes angeordnet werden und daher genau die richtige Länge aufweisen muss. Außerdem muss das Gelände das Aufstellen der Aststütze genau an der abzustützenden Stelle zulassen.

Aufgabe der vorliegenden Erfindung ist es, eine variabel einsetzbare Aststütze der eingangs genannten Art vorzuschlagen, welche bei geringem baulichen Aufwand die genannten Nachteile des Standes der Technik vermeidet.

Diese Aufgabe wird bei einer Aststütze der eingangs genannten Art im Wesentlichen dadurch gelöst, dass die Halterung einen mit Mitteln zum werkzeugfreien Festlegen in veränderlicher Höhe an den Stützstab ausgestalteten Seitenausleger aufweist und das Auflager sich an dem freien Ende des Seitenauslegers befindet.

Auf diese Weise wird mit geringem baulichen Aufwand eine leicht höhenverstellbare und dadurch vielfältig einsetzbare und leicht zu montierende Aststütze erhalten. Die Aststütze kann in einem Kreisfeld um die abzustützende Stelle des Astes herum aufgestellt werden, wobei der Radius des Kreisfeldes durch die wirksame radiale Länge des Auslegers bestimmt ist. Hindernisse auf oder in dem Boden, bspw. Wurzeln, Felsen oder dgl., können somit leicht umgangen werden und die Aststütze ist vielseitig einsetzbar. Dabei hat sich gezeigt, dass trotz des als Hebelarm wirkenden Seitenauslegers eine ausreichende Stützkraft erreicht werden kann. Somit war es möglich, das von nicht gewichtsbelasteten Baumstammhaltern her bekannte Prinzip eines Seitenauslegers, wie es bspw. in der DE 28 09 388 A1 gezeigt ist, auf Aststützen, die im Gegensatz zu den Baumstammhaltern ein schweres Gewicht tragen müssen, zu übertragen. Die Anordnung des Auflagers weit außen sorgt für ein Kippmoment auf die Halterung, welches zu deren Festlegung an dem Stützstab genutzt werden kann.

Dabei hat sich als vorteilhaft erwiesen, wenn ein Stützstab mit einem im Wesentlichen kreisrunden Querschnitt verwendet wird, so dass der Seitenausleger mittels der Halterung in beliebig unterschiedlichen Richtungen weisend an dem Stützstab angebracht werden kann. Dadurch wird einerseits eine hohe Auswahlmöglichkeit für eine geeigneten Position zum Aufstellen des Stützstabes und andererseits eine gute Anpassung der Aststütze an die Richtung des abzustützenden Astes relativ zu der Stellung des Stützstabes erreicht. Prinzipiell können aber Stützstäbe mit allen denkbaren Querschnittsprofilen, beispielsweise auch solche mit einem polygonalen Querschnitt, eingesetzt werden.

Die Halterung ist vorzugsweise mit einer an das Querschnittsprofil des Stützstabes angepassten hülsenartigen Umfassung versehen, welche über den Stützstab führbar und in gewünschter Höhe festlegbar ist. Bei im Wesentlichen kreisrundem Querschnitt ist die Umfassung um den Stützstab vor ihrer Arretierung zur Festlegung der Richtung des Seitenauslegers beliebig schwenkbar.

Um eine einfach zu schaffende und auch wieder zu lösende sowie zudem feste verdrehsichere Fixierung des Seitenauslegers an dem Stützstab zu erreichen kann an der Umfassung zur Festlegung an dem Stützstab erfindungsgemäß auf der dem Auflager zugewandten Seite ein Stützlager, z.B. in Form eines Vorsprunges, eines Dornes, einer Zunge oder einer Lasche vorgesehen sein, welches ggf. nach unten über die Umfassung hinausragt und ggf. nach innen abgewinkelt ist. Durch das Eigengewicht des Seitenauslegers und durch das auf den Seitenauslagern wirkende Gewicht des abgestützten Astes wird das Stützlager auf die Außenumfangsfläche des Stützstabes gedrückt. Für diese Art der Fixierung können Stützstäbe aus jedem eine ausreichende Festigkeit und Steifigkeit aufweisenden, aber dennoch ein Festdrücken, insbesondere ein Eindringen der Befestigungsmittel in die Außenumfangsfläche des Stützstabes ermöglichenden Material, beispielsweise Holz oder dgl., verwendet werden.

Das Stützlager kann der Einfachheit halber am Ineren der Umfassung ausgebildet sein. Ferner ist es zweckmäßigerweise in Bezug auf den Stützstab spitz oder scharfkantig ausgebildet, so dass eine zuverlässige Arretierung stattfindet. Dabei sollte die Spitzheit oder Scharfkantigkeit am unteren Ende des Stützlagers vorgesehen sein, damit ein möglichst großer Hebelarm zur Arretierung ausgenutzt wird.

Zur Sicherung der Fixierung kann an der dem Stützlager gegenüberliegenden Innenseite der Umfassung zusätzlich ein entgegengesetzt orientiertes Gegenlager, z.B. in Form eines Vorsprungs eines Dornes, einer Zunge oder einer Lasche vorgesehen sein, welches ggf. nach innen abgewinkelt ist.

Besonders kostengünstig kann der Seitenausleger und zumindest der dem Auflager abgewandte Abschnitt der Umfassung aus einem Teil hergestellt sein, bspw. durch Umbiegen eines Bandeisens oder dgl., wobei die beiden Enden des Bandeisens durch Nietung oder durch Punktschweißung fest und nicht lösbar miteinander verbunden sind.

Um eine gute Anpassung an die Richtung des abzustützenden Astes relativ zu der Stellung des Stützstabes zu erreichen, kann das Auflager erfindungsgemäß um eine stützstabachsenparallele Achse drehbar gelagert sein, so dass sie sich für das Auflegen des Astes optimal ausrichten lässt. Dazu kann das Auflager bspw. in seiner Mitte einen von der der Auflagefläche eingegengesetzten Seite wegstehenden Bolzen aufweisen, welcher in einer Aufnahme des Seitenauslegers drehbar angeordnet ist. Zu diesem Zweck kann ein runder Bolzen verwendet werden, dessen Ende eine Querbohrung zum Einstecken eines Federsteckers aufweist und/oder flach zusammengequetscht ist. Es ist aber auch möglich, einen als Gewindebolzen ausgebildeten Bolzen zu verwenden, auf den zur Festlegung der Winkelstellung des Auflagers eine Mutter aufschraubbar ist.

Der Seitenausleger weist vorzugsweise zwei Schenkel auf, welche zur Bildung des einen dem Auflager zugewandten Bereiches der Umfassung mit einem Zwischenstück miteinander verbunden sind, um die erforderliche Stabilität in Längs- und in Querrichtung herzustellen. Dieses Zwischenstück kann eingefügt bzw. eingeschweißt sein. Dabei kann das Stützlager vorzugsweise an dem Zwischenstück ausgebildet sein. Die Schenkel selbst können an ihren freien Enden zur Bildung der zylindrischen Aufnahme für den Bolzen des Auflagers zusammengeführt sein.

Der Seitenausleger kann erfindungsgemäß rechtwinklig relativ zu der Achse des Stützstabes stehen. Es hat sich jedoch als vorteilhaft erwiesen, wenn der Seitenausleger leicht schräg nach oben abgewinkelt zu der Achse des Stützstabes angeordnet ist, um das aufzunehmende Gewicht wirksam in den Stützstab einzuleiten. Die Winkel können bspw. zwischen etwa 50 und 90 Grad betragen.

Um eine Beschädigung des Astes zu vermeiden, kann die Auflagefläche mit einer Schutzummantelung, bspw. aus elastischem Gummi oder Kunststoff, abgedeckt sein. Besonders einfach kann dafür ein über die Gabelzinken gezogener Gummi- oder Kunststoffschlauch dienen.

In Weiterbildung des Erfindungsgedankens kann die Aststütze bei besonders hohen aufzunehmenden Gewichten eine zusätzliche zweite Stützstrebe aufweisen, welche vorzugsweise an dem freien Ende des Seitenauslegers angreift und sich winklig dazu und zu dem Stützstab erstreckt und dort werkzeugfrei festlegbar ist, wie der Seitenausleger selbst.

Ein seitliches Abrutschen des Stützstabes auf dem Untergrund kann dadurch auf einfache Weise vermieden werden, dass er an seinem unteren freien Ende mit einem Dorn oder dgl. Rutschsicherung versehen ist.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: eine Seitenansicht einer erfindungsgemäßen Aststütze, unten weggebrochen.
- Fig. 2: eine Draufsicht auf die Aststütze gemäß Fig. 1, und
- Fig. 3: eine weitere Ausführungsform einer erfindungsgemäßen Aststütze in Seitenansicht entsprechend Fig. 1.

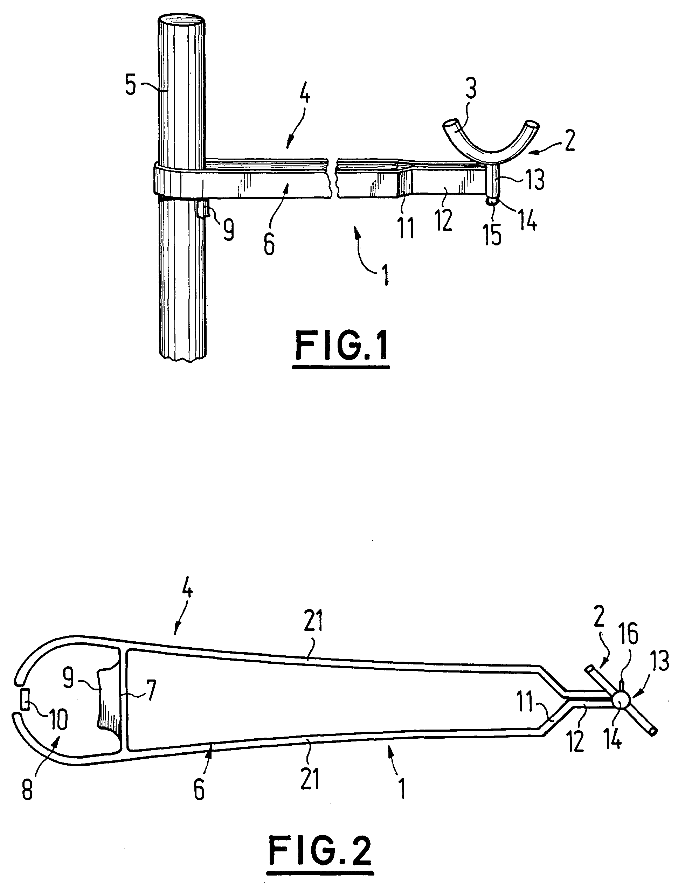

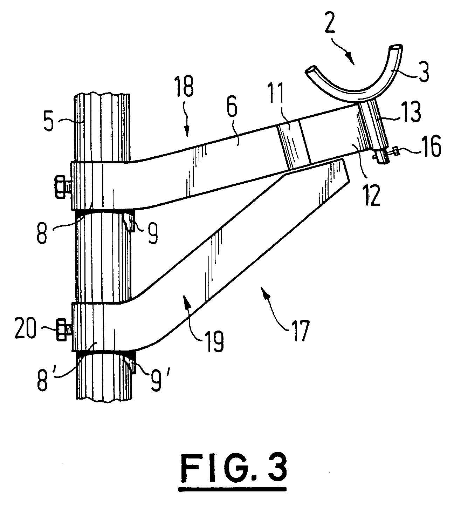

Die in Fig. 1 dargestellte Aststütze 1 weist ein Auflager 2 für einen Ast mit einer im Wesentlichen U-förmig ausgebildeten Auflagefläche 3 und einer Halterung 4 zur Festlegung an einem Stützstab 5 z.B. aus Holz auf. Die Halterung 4 bildet einen Seitenausleger 6, an dessen freiem Ende das Auflager 2 drehbar angeordnet ist. Das dem Auflager 2 gegenüberliegende Ende des Seitenauslegers 6 ist, wie aus Fig. 2 ersichtlich, in Form einer Umfassung 8 an den in diesem Fall im Wesentlichen kreisrunden Querschnitt des Stützstabes 5 angepasst. Mittels eines zwischen zwei Stegen 21 der Halterung 4 festgeschweißten oder anderweitig festgelegten Zwischenstücks 7 erhält die Umfassung 8 einen hülsenartigen Charakter, welche auf den Stützstab 5 aufgeschoben und in beliebiger Höhe desselben festlegbar ist. Der Seitenausleger 6 steht dabei etwa senkrecht zu der Achse des Stützstabes 7 (Fig. 1) oder ist leicht nach oben abgewinkelt (Fig. 3).

Entsprechend Fig. 2 verläuft der dem Zwischenstück 7 gegenüberliegende Bereich der Umfassung 8 etwa kreisbogenförmig, um bspw. über eine im Querschnitt entsprechend kreisrunde Stützstange 5 geschoben werden zu können. Natürlich sind auch andere Formen der Umfassung 8 und eines entsprechenden Stützstabes 5, insbesondere eine rechteckige Form, denkbar.

Zum Festlegen der Halterung 4 an dem Stützstab 5 und, um ein Verdrehen der Aststütze 1 gegenüber einem z.B. einen kreisrunden Querschnitt aufweisenden Stützstabes 5 zu verhindern, ist an dem Zwischenstück 7 der Umfassung 8, also auf der dem Auflager 2 zugewandten Seite des Stützstabes 5 ein nach unten weisendes nach innen abgewinkeltes Stützlager 9 in Form einer leicht eingewölbten Zunge des Zwischenstückes 7 vorgesehen. Das Stützlager 9 drückt sich mit einer scharfen Kante unter dem Eigengewicht der Halterung 4 und dem Gewicht des abzustützenden Astes gegen die Außenumfangsfläche des Stützstabes 5, so dass die Halterung 4 durch Verkanten zuverlässig an dem Stützstab 5 festlegbar und ein Verdrehen der Halterung 6 gegenüber dem Stützstab 5 verhindert ist. Ebenso leicht lässt sich die Verkantung durch leichtes Anheben am freien Ende der Halterung 4 wieder aufheben und die Halterung 4 zu einer anderen Stelle des Stützstabes 5 verschieben.

Um eine noch sicherere Festlegung der Halterung 4 zu erhalten, weist die Umfassung 8 an der dem Zwischenstück 7 gegenüberliegenden Seite einen gegenüber dem Stützlager 9 entgegengesetzt orientiertes, aus dem oberen Rand der Umfassung 8 herausgebogenes und ebenfalls nach innen abgewinkeltes Gegenlager 10 auf. Wenn der Stützstab 5 aus Holz oder dgl. nachgiebigem Material besteht, kann sowohl das Stützlager 9 als auch des Gegenlager 10 in das Holz oder sonstige nachgiebige Material eindringen und für eine besonders sichere Festlegung sorgen.

Der Seitenausleger 6 ist mit dem äußeren Bereich der Umfassung 8 einteilig aus einem Bandeisen gebogen, wobei von der Umfassung 8 und dem Zwischenstück 7 zwei senkrecht stehende Schenkel 21 ausgehen, welche im weiteren Verlauf über Abwinklungen 11 in Abschnitte 12 übergehen, welche aneinander liegen und bspw. durch Nieten, Stanzen, Schweißen oder dgl. miteinander verbunden sind. An dem der Umfassung 8 entgegengesetzten Ende des Seitenauslegers 6 ist durch Umbiegen des Bandeisens eine zylindrische Aufnahme 13 zur drehbaren Lagerung eines Bolzens 14 des Auflagers 2 ausgebildet. Der Seitenausleger 6 kann so einfach hergestellt werden und ist aufgrund des Zwischenstückes 7, der Abwinklungen 11 und des Aneinanderliegens der Abschnitte 12 gegen Verformung versteift.

Der Bolzen 14 kann auf seinem der Auflagefläche 3 entgegengesetzte Seite zu seiner axialen Festlegung flach zusammengequetscht oder mittels eines in einer Querbohrung 15 aufgenommenen Federsteckers 16 gesichert sein.

Bei der in Fig. 3 gezeigten Aststütze 17 ist zusätzlich zu einer Halterung 18, die im Wesentlichen der in den Fig. 1 und 2 gezeigten Halterung 4 entspricht und sich von dieser lediglich dadurch unterscheidet, dass der Seitenausleger 6 nicht rechtwinklig, sondern zu der Stützstabachse nach oben schräg abgewinkelt ist, mit einer zusätzlichen Stützstrebe 19 versehen.

Ein Unterschied liegt auch im Bereich der äußeren Umfassung 8 für den Seitenausleger 6 und die Stützstrebe 19, indem dort jeweils eine Gewindeöffnung vorgesehen ist, durch die von Hand eine Feststellschraube 20 zur Bildung des Gegenlagers 10 eindrehbar ist.

An dem dem Stützstab 5 abgewandten Ende des Seitenauslegers 6 greift in einem Bereich 12 die Stützstrebe 19 von unten an den Seitenausleger 6 an und erstreckt sich zu dessen Abstützung winklig zu dem Seitenausleger 6 bis zu dem Stützstab 5, an dem sie mittels einer Umfassung 8' ähnlich wie der Seitenausleger 6 festlegbar ist. Die Stützstrebe 19 sorgt für eine weitere Versteifung der Aststütze 1, die dann insbesondere bei der Abstützung schwerer Äste Anwendung findet. Dazu kann die Stützstrebe 19 in dem Abschnitt 12 des Seitenauslegers 6, wie im dargestellten Beispiel, angeschweißt oder auch mittels Bolzen, Haken oder dgl. lösbar befestigbar sein, oder auch nur lose anliegen. Die Höhenverstellung und -festlegung erfolgt ähnlich wie bei dem Seitenausleger 6 mit Hilfe eines Stützlagers 9'.

Mit der Erfindung ist die Möglichkeit geschaffen, höhenverstellbare Aststützen 1 und 17 im Bereich eines Radius, welcher der wirksamen Länge des Seitenauslegers 6 entspricht, um die abzustützende Stelle herum anzuordnen, so dass ein variabler Einsatz möglich ist.

### Bezugszeichenliste:

- 1: Aststütze
- 2: Auflager
- 3: Auflagefläche
- 4: Halterung
- 5: Stützstab
- 6: Seitenausleger
- 7: Zwischenstück
- 8: hülseartige Umfassung
- 9: Stützlager
- 10: Gegenlager
- 11: Abwinklung
- 12: Abschnitt
- 13: zylindrische Aufnahme
- 14: Bolzen
- 15: Querbohrung
- 16: Federstecker
- 17: Aststütze
- 18: Halterung
- 19: Stützstrebe
- 20: Feststellschrauben
- 21: Schenkel

## Patentansprüche

1. Aststütze, insbesondere für Bäume, mit einem gabelartigen Auflager (2) für einen Ast, welches z.B. eine im Wesentlichen U- oder V-förmige Auflagefläche (3) aufweist, und mit einer Halterung (4) zur Anbringung des Auflagers (2) an einem Stützstab (5) in vorgegebener Höhe, **dadurch gekennzeichnet, dass** die Halterung (4) einen mit Mitteln zum werkzeugfreien Festlegen in veränderlicher Höhe an dem Stützstab (5) ausgestalteten Seitenausleger (6) aufweist und das Auflager (2) sich an dem freien Ende des Seitenauslegers (6) befindet.

2. Aststütze nach Anspruch 1, **dadurch gekennzeichnet, dass** die Halterung (4) eine an den z.B. im Wesentlichen kreisrunden Querschnitt des Stützstabes (5) angepasste hülsenartige Umfassung (8) aufweist, welche über den Stützstab (5) führbar und an diesem festlegbar ist.

3. Aststütze nach Anspruch 1 oder 2, **dadurch gekennzeichnet, dass** die Umfassung (8) zur Festlegung an dem Stützstab (5) ein auf der dem Auflager (2) zugewandten Seite ein Stützlager (9), z.B. in Form eines Vorsprunges, eines Dornes, einer Zunge oder einer Lasche aufweist, welches ggf. nach unten über die Umfassung (8) hinausragt und ggf. nach innen abgewinkelt ist.

4. Aststütze nach Anspruch 3, **dadurch gekennzeichnet, dass** das Stützlager (9) am Inneren der Umfassung (8) ausgebildet ist.

5. Aststütze nach Anspruch 3 oder 4, **dadurch gekennzeichnet, dass** das Stützlager (9) in Bezug auf den Stützstab (5) spitz oder scharfkantig ausgebildet ist.

6. Aststütze nach einem der Ansprüche 3 bis 5, **dadurch gekennzeichnet, dass** die Spitzheit oder Scharfkantigkeit am unteren Ende des Stützlagers (9) vorgesehen ist.

7. Aststütze nach einem der Ansprüche 3 bis 6, **dadurch gekennzeichnet, dass** die Umfassung (8) an der dem Stützlager (9) gegenüberliegenden Innenseite zusätzlich eine entgegengesetzt orientiertes Gegenlager (10), z.B. in Form eines Vorsprungs, eines Dornes, einer Zunge oder einer Lasche aufweist, welches ggf. nach innen abgewinkelt ist.

8. Aststütze nach einem der Ansprüche 1 bis 4, **dadurch gekennzeichnet, dass** der Seitenausleger (6) mit zumindest der dem Auflager (2) abgewandten Abschnitt der Umfassung (8) aus einem einteiligen gebogenen Bandeisen oder dgl., gebildet ist.

9. Aststütze nach einem der Ansprüche 1 bis 10, **dadurch gekennzeichnet, dass** das Auflager (2) drehbar an dem Seitenausleger (6) gelagert ist.

10. Aststütze nach Anspruch 9, **dadurch gekennzeichnet, dass** das Auflager (2) bspw. in ihrer Mitte einen von der der Auflagefläche (3) entgegengesetzten Seite wegstehenden Bolzen (14) aufweist, welcher in einer Aufnahme (13) des Seitenauslegers (6) drehbar angeordnet ist.

11. Aststütze nach Anspruch 10, **dadurch gekennzeichnet, dass** der Bolzen (14) ein vorzugsweise runder Bolzen ist, dessen Ende eine Querbohrung (15) zum Einstecken eines Federsteckers (16) aufweist und/oder flach zusammengequetscht ist.

12. Aststütze nach Anspruch 10 oder 11, **dadurch gekennzeichnet, dass** der Bolzen (14) ein Gewindebolzen ist.

13. Aststütze nach einem der Ansprüche 1 bis 12, **dadurch gekennzeichnet, dass** der Seitenausleger (6) zwei Schenkel (21) aufweist, welche zur Bildung des einen dem Auflager (2) zugewandten Bereiches der Umfassung (8) mit einem Zwischenstück (7) miteinander verbunden sind.

14. Aststütze nach Anspruch 13, **dadurch gekennzeichnet, dass** das Stützlager (9) an dem Zwischenstück (7) ausgebildet ist.

15. Aststütze nach Anspruch 13 oder 14, **dadurch gekennzeichnet, dass** die Schenkel (21) an ihren freien Enden zur Bildung der zylindrischen Aufnahme (13) für den Bolzen (14) des Auflagers (2) zusammengeführt sind.

16. Aststütze nach einem der Ansprüche 1 bis 15, **dadurch gekennzeichnet, dass** die Auflagefläche (3) des Auflagers (2) mit einer Schutzummantelung, bspw. aus elastischem Gummi oder Kunststoff, abgedeckt ist.

17. Aststütze nach einem der Ansprüche 1 bis 16, **gekennzeichnet durch** eine zusätzliche Stützstrebe (19) für die Abstützung des Seitenauslegers (6) mit Abstand von der Umfassung (8), wobei die Stützstrebe (19) bezüglich der Achse des Stützstabes (5) stärker nach oben abgewinkelt ist als der Seitenausleger (6) und die Stützstrebe (19) ähnlich oder gleich werkzeugfrei an dem Stützstab (5) festlegbar ist wie der Seitenausleger (6) selbst.

18. Abstütze nach einem der Ansprüche 1 bis 17, **dadurch gekennzeichnet, dass** der Stützstab (5) an seinem freien unteren Ende mit einem Dorn versehen ist.
